# EUROPÄISCHE PATENTSCHRIFT

(11) **EP 0 467 091 B1**
(45) Veröffentlichungstag und Bekanntmachung des Hinweises auf die Patenterteilung: **21.09.1994**
(21) Anmeldenummer: 91110220.0
(22) Anmeldetag: 21.06.1991
(51) Int. Cl.: B67B 3/26

(54) **Vorrichtung zum Aufschrauben von Schraubkappen auf Behälter mit Drehmomentbegrenzung**
Device for screwing screw-cap on container with testing of the screwing
Dispositif pour visser des bouchons à vis sur des récipients avec vérification du vissage

(30) Priorität: 19.07.1990 DE 4022939
(43) Veröffentlichungstag der Anmeldung: 22.01.1992
(73) Patentinhaber: ROBERT BOSCH GMBH, 70442 Stuttgart (DE)
(72) Erfinder: Keppeler, Horst, W-5000 Köln 40 (DE); Terbos, Oton, W-4010 Hilden (DE)

(56) Entgegenhaltungen:
- EP-A- 0 205 803
- FR-A- 2 554 801
- GB-A- 2 096 361
- GB-A- 2 129 409
- US-A- 4 607 196

## Beschreibung

### Stand der Technik

Die Erfindung betrifft eine Vorrichtung zum Aufschrauben von Schraubkappen auf Behälter nach dem Oberbegriff des Anspruchs 1. Bei derartigen Vorrichtungen drehen die Schraubköpfe je eine Schraubkappe auf dem Gewindeteil eines Behälters fest, wobei das Drehmoment begrenzende Einrichtungen das Anzugsmoment bestimmen. Bei fehlerhaftem Gewinde am Behälter oder an der Schraubkappe kann es dabei vorkommen, daß nach einer bestimmten Zeitdauer ein Stillstand des Schraubkopfes nicht erreicht wird.

Bei einer beispielsweise aus der FR-A-2 554 801 bekannten Vorrichtung dieser Art, bei der jedem Schraubkopf ein eigener Antriebsmotor und jedem dieser Motoren eine Tasteinrichtung in Form eines Drehzahldetektors zugeordnet sind, werden die Signale der Detektoren hinsichtlich der Aufschraubfunktion von einer Überwachungs- und Steuereinrichtung ausgewertet. Zeigt ein Signal an, daß sich ein Schraubkopf zu einem bestimmten Zeitpunkt immer noch dreht, was auf einen Fehlerzustand hindeutet, wird eine Aussondereinrichtung angesteuert, die den betreffenden Behälter von der Weiterbehandlung ausscheidet. Durch die Anordnung jeweils eines Detektors an jedem Antriebsmotor bzw. jedem Schraubkopf ist die bekannte Vorrichtung im Aufbau und in der Steuerung aufwendig.

### Aufgabe der Erfindung

Der Erfindung liegt die Aufgabe zugrunde, eine Vorrichtung zum Aufschrauben von Schraubenkappen auf Behälter mit einer die Verschraubfunktion überwachenden Tasteinrichtung zu schaffen, die einfach aufgebaut, leicht zugänglich angeordnet ist und deren Signale in einfacher Weise ausgewertet werden können.

### Vorteile der Erfindung

Bei der erfindungsgemäßen Aufschraubvorrichtung mit den kennzeichnenden Merkmalen des Anspruchs 1 erfaßt die Tasteinrichtung jeweils die in ihren Erfassungsbereich gelangenden Markierungen eines sich vorbeibewegenden Schraubkopfes. Aus der jeweils erfaßten Anzahl von Markierungen ist es in einfacher Weise möglich, darauf zu schließen, ob der überprüfte Schraubkopf beim Vorbeilaufen sich noch dreht oder stillsteht. Ein sich noch drehender Schraubkopf erzeugt nämlich mehr Impulse als ein stillstehender, so daß durch Vergleichen der jeweils ermittelten Anzahl von Impulsen mit einer gespeicherten Sollzahl festgestellt werden kann, ob eine Schraubkappe auf einem Behälter ordnungsgemäß angezogen ist oder nicht. Dabei hat die Geschwindigkeit, mit der die Schraubköpfe an der Tasteinrichtung vorbeilaufen, keinen Einfluß.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist die Ausbildung der Tasteinrichtung als optisch wirkende Einrichtung nach Anspruch 2, da eine solche an einer Aufschraubvorrichtung vom Bedienungspersonal in einfacher Weise einstellbar und überprüfbar ist. Zum Verarbeiten der von der Tasteinrichtung erzeugten Impulse ist eine Einrichtung nach den Merkmalen des Anspruchs 4 von besonderem Vorteil. Zum Auswerten der ermittelten Werte sind die Maßnahmen nach den Ansprüchen 5 und 6 von besonderem Vorteil.

### Zeichnung

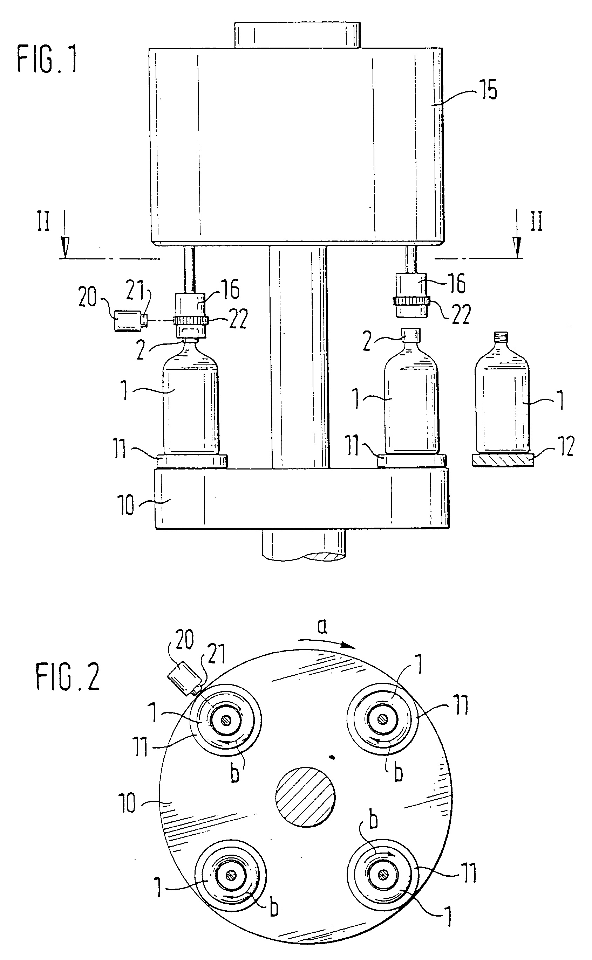

Ein Ausführungsbeispiel der Erfindung ist in der Zeichnung dargestellt und wird im folgenden näher beschrieben. Es zeigen Figur 1 eine Vorrichtung zum Aufschrauben von Schraubkappen auf Behälter stark vereinfacht in Seitenansicht und Figur 2 die Vorrichtung nach Figur 1 stark vereinfacht im Querschnitt in der Ebene II-II der Figur 1.

### Beschreibung des Ausführungsbeispiels

Eine Vorrichtung zum Aufschrauben von Schraubkappen 2 auf das Gewinde von flaschenartigen Behältern 1 hat einen kontinuierlich um eine vertikale Achse umlaufenden Drehtisch 10 mit beispielsweise vier Stellplätzen 11 zur Aufnahme jeweils eines Behälters 1. Die Behälter 1 werden von einer seitlich am Drehtisch 10 vorbeilaufenden Transportbahn 12 zu- und abgeführt. Oberhalb des in Pfeilrichtung a kontinuierlich umlaufenden Drehtisches 10 befindet sich ein mit diesem gleichsinnig umlaufender Antriebskopf 15, an dessen Unterseite zu den Stellplätzen 11 ausgerichtete Schraubköpfe 16 nach unten vorragen. Die mit dem Antriebskopf 15 auf einer Kreisbahn umlaufenden Schraubköpfe 16 sind im Antriebskopf 15 auf- und abverschiebbar angeordnet. Sie senken sich nach dem Übergeben der Behälter 1 auf die Stellplätze 11 aus einer oberen Stellung auf die Schraubkappen 2 und kehren kurz vor dem Auslauf der Behälter 1 wieder in ihre obere Stellung zurück. Die Schraubköpfe 16 werden von einem gemeinsamen Antrieb oder von Einzelantrieben um zur Drehachse des Antriebskopfes 15 und des Drehtisches 10 parallele Achsen in Pfeilrichtung b gedreht. Das übertragbare Drehmoment der Schraubköpfe 16 ist durch Rutschkupplungen oder sonstige drehmomentbegrenzende Einrichtungen begrenzt, so daß das Anzugsmoment der Schraubkappen 2 auf den Behältern 1 einen bestimmten Wert nicht übersteigt.

Zum Prüfen, ob jeweils eine Schraubkappe 2 an einem Behälter 1 ordnungsgemäß angezogen ist, ist am Umlaufweg der Schraubköpfe 16, und zwar kurz bevor diese aus der unteren Arbeitsstellung in die obere Stellung gehoben werden, neben der Kreisbahn der Schraubköpfe 16 eine Prüfeinrichtung 20 ortsfest angeordnet, die mit einer Tasteinrichtung 21 gegen die vorbeilaufenden Schraubköpfe 16 weist. Ferner sind am Umfang eines jeden Schraubkopfes 16 linienförmige, achsparallele Markierungen 22 angeordnet, auf deren Höhenlage die Tasteinrichtung 21 bei abgesenkten Schraubköpfen 16 eingestellt ist. Die Markierungen 22 bestehen vorzugsweise aus zur Drehachse der Schraubköpfe 16 parallelen Erhebungen und Nuten, welche in Kombination linienförmige optische Kontraste bilden. Ferner weist die Tasteinrichtung 21 eine Fotozelle auf, welche auf die Kontraste anspricht und Impulse an einen Zähler abgibt. Der Zähler ist mit einem Komparator verbunden, mit dem auch ein Speicher verbunden ist.

Läuft ein Schraubkopf 16 an der Tasteinrichtung 21 vorbei und dreht sich dieser nicht um seine eigene Achse, weil die von ihm auf einen Behälter 1 aufgeschraubte Schraubkappe 2 bereits mit dem angestrebten Anzugsmoment auf dem Behälter 1 aufgeschraubt ist, erfaßt die Tasteinrichtung 21 eine bestimmte Anzahl von Kontrasten der Markierungen 22 am Schraubkopf 16. Dreht sich jedoch der Schraubkopf 16 im Bereich der Tasteinrichtung 21 zusätzlich um seine eigene Achse, weil die Schraubkappe 2 nicht richtig gefaßt hat, Fehler am Gewinde vorliegen oder aufgrund anderer Abnormitäten, erfaßt die Tasteinrichtung 21 mehr als die bestimmte Mindestanzahl an Kontrasten. Die Anzahl der jeweils beim Durchgang eines Schraubkopfes 16 erfaßten Kontraste, die als Impulse an den Zähler übermittelt werden, werden mit der im Speicher eingegebenen Sollzahl verglichen. Entspricht die ermittelte Anzahl von Kontrasten der Sollzahl einschließlich einer gewissen Toleranz, bedeutet dies, daß die Schraubkappe 2 ordnungsgemäß auf dem Behälter 1 angezogen ist. Liegt jedoch eine Abweichung vor, nämlich daß die ermittelte Anzahl von Kontrasten größer ist als die Sollzahl, bedeutet dies, daß der Behälter nicht richtig verschlossen ist. Es wird ein Signal erzeugt, das einen Ausweiser betätigt, wenn der "Ausschuß"-Behälter dort ankommt.

Die Prüfeinrichtung 20 ist außerdem so ausgerüstet, daß auch ihre Funktionstüchtigkeit selbsttätig überprüft wird. Dazu wird davon ausgegangen, daß jeder Schraubkopf 16 beim Vorbeilaufen an der Tasteinrichtung 21 eine Mindestanzahl von Impulsen an den Zähler abgibt. Ist dies nicht der Fall, weil die Tasteinrichtung 21 verschmutzt oder nicht richtig justiert ist, oder weil die Markierungen 22 auf einem Schraubkopf 16 verschmiert oder sonstwie kontrastarm sind, wird ein Störungssignal erzeugt und die Vorrichtung abgeschaltet.

Ergänzend wird bemerkt, daß der Steuerteil der Prüfeinrichtung auch abseits von der Taststelle angeordnet sein kann, wobei lediglich die Tasteinrichtung 21 direkt am Umlaufweg der Schraubköpfe angeordnet und mit der Auswerteeinrichtung durch eine elektrische oder optische Leitung verbunden ist. Ferner wird darauf hingewiesen, daß die Tasteinrichtung und die Markierungen nicht nur optisch, sondern auch elektrisch oder magnetisch wirken können.

## Patentansprüche

1. Vorrichtung zum Aufschrauben von Schraubkappen auf Behälter mit einer die Behälter (1) auf Plätzen (11) fördernden Fördereinrichtung (10), mit den Plätzen (11) der Fördereinrichtung (10) zugeordneten, drehbaren Schraubköpfen (16), welche die Schraubkappen (2) mit einem bestimmten Drehmoment auf den Behältern (1) anziehen, und mit einer den Schraubköpfen (16) zugeordneten, das Drehen oder Nichtdrehen der Schraubköpfe erfassenden Tasteinrichtung (21), dadurch gekennzeichnet, daß am Umfang der Schraubköpfe (16) Markierungen (22) angeordnet sind und daß die Tasteinrichtung (21) an der Bewegungsstrecke der Schraubköpfe (16) auf die Markierungen (22) eingestellt fest angeordnet ist.

2. Vorrichtung nach Anspruch 1, dadurch gekennzeichnet, daß die Markierungen (22) als optisch wirkende Kontrastmittel ausgebildet sind und die Tasteinrichtung (21) eine Fotozelle aufweist.

3. Vorrichtung nach Anspruch 2, dadurch gekennzeichnet, daß die Markierungen (22) als zur Drehachse eines Schraubkopfes (16) parallele Linien ausgebildet sind.

4. Vorrichtung nach einem der Ansprüche 1 bis 3, dadurch gekennzeichnet, daß die von der Tasteinrichtung (21) beim Durchgang eines Schraubkopfes (16) jeweils ermittelte Anzahl von Impulsen mit einer voreingestellten, in einem Speicher gelagerten Anzahl von Impulsen verglichen wird, und daß bei einer Abweichung der beiden Anzahlen voneinander ein Signal erzeugt wird.

5. Vorrichtung nach Anspruch 4, dadurch gekennzeichnet, daß beim Erfassen einer Anzahl von Impulsen, die größer ist als die gespeicherte Anzahl ein Signal zum Ausscheiden des von dem überwachten Schraubkopf (16) behandelten Behälters (1) erzeugt wird.

6. Vorrichtung nach Anspruch 4, dadurch gekennzeichnet, daß beim Erfassen einer Anzahl von Impulsen, die kleiner ist als die gespeicherte Anzahl, ein Signal zum Stillsetzen der Vorrichtung erzeugt wird.

## Claims

1. Device for screwing screw caps onto containers, having a conveying apparatus (10) which conveys the containers (1) to positions (11), having rotatable screwing heads (16) which are assigned to the positions (11) of the conveying apparatus (10) and tighten the screw caps (2) with a particular torque on the containers (1), and having a scanning apparatus (21) which is assigned to the screwing heads (16) and records the turning or non-turning of the screwing heads, characterized in that marks (22) are arranged on the circumference of the screwing heads (16), and in that the scanning apparatus (21) is arranged fixedly on the movement path of the screwing heads (16) and is set to the marks (22).

2. Device according to Claim 1, characterized in that the marks (22) are designed as visually acting contrasting means, and the scanning apparatus (21) has a photocell.

3. Device according to Claim 2, characterized in that the marks (22) are designed as lines which are parallel to the axis of rotation of a screwing head (16).

4. Device according to one of Claims 1 to 3, characterized in that the number of pulses, determined in each case by the scanning apparatus (21) when a screwing head (16) passes through, is compared to a preset number of pulses stored in a memory, and in that a signal is generated if the two numbers differ from one another.

5. Device according to Claim 4, characterized in that, if a number of pulses is recorded which is greater than the stored number, a signal is generated to separate the container (1) treated by the monitored screwing head (16).

6. Device according to Claim 4, characterized in that, if a number of pulses is recorded which is less than the stored number, a signal is generated to stop the device.

## Revendications

1. Dispositif pour visser les bouchons à vis sur des récipients avec un dispositif de transport (10) pour transporter les récipients (1) aux postes (11), avec des têtes de vissage (16) pouvant tourner, associées aux postes (11) du dispositif de transport (10), têtes de vissage qui vissent les bouchons à vis (2) avec un couple de rotation déterminé sur les récipients (1) et avec un dispositif de détection (21) associé aux têtes de vissage (16), qui détecte la rotation ou la non rotation des têtes de vissage, dispositif caractérisé en ce que sur le pourtour des têtes de vissage (16) sont disposés des marquages (22) et en ce que le dispositif de détection (21) est disposé de façon à être sur la trajectoire des têtes de vissage (16), réglé sur les marquages (22).

2. Dispositif selon la revendication 1, caractérisé en ce que les marquages sont constitués sous la forme de contrastes agissant optiquement et en ce que le dispositif de détection (21) comporte une cellule photoélectrique.

3. Dispositif selon la revendication 2, caractérisé en ce que les marquages (22) sont constitués sous la forme de lignes parallèles à l'axe de rotation d'une tête de vissage (16).

4. Dispositif selon l'une des revendications 1 à 3, caractérisé en ce que le nombre d'impulsions détectées par le dispositif de détection (21) lors du passage d'une tête de vissage (15) est comparé à un nombre d'impulsions préétabli, mis dans une mémoire et en ce qu'en cas d'écart entre les deux nombres, un signal est produit.

5. Dispositif selon la revendication 4, caractérisé en ce que lors de la détection d'un nombre d'impulsions qui est plus grand que le nombre mis en mémoire, on produit un signal pour écarter le récipient (1) traité par la tête de vissage sous surveillance (16)

6. Dispositif selon la revendication 4, caractérisé en ce que lors de la détection d'un nombre d'impulsions, qui est plus petit que le nombre mis en mémoire, on produit un signal qui arrête le dispositif.
